# DEMANDE DE BREVET EUROPEEN

(11) **EP 0 670 346 A1**
(43) Date de publication de la demande: **06.09.1995**
(21) Numéro de dépôt: 95400355.4
(22) Date de dépôt: 21.02.1995
(51) Int. Cl.: C08K 5/00, C08K 5/50, C08K 3/32, C08K 3/36, C08L 71/02, C08G 65/32, H01M 10/40, H01M 6/18

(54) **Matériau électrolyte conducteur protonique**

(30) Priorité: 23.02.1994 FR 9402048
(71) Demandeur: SAINT-GOBAIN VITRAGE, F-92400 Courbevoie (FR)
(72) Inventeur: Padoy, Christian, F-95500 Gonesse (FR); Le Couviour, Didier, F-93120 La Courneuve (FR)
(74) Mandataire: Renous Chan, Véronique

(57) **Abrégé**

La présente invention a pour but un matériau macromoléculaire conducteur protonique comprenant un complexe solide d'acide orthophosphorique anhydre dans du polyoxyéthylène et comportant en outre un agent oxydant et/ou un agent thixotrope..

Le matériau macromoléculaire selon l'invention est utilisé notamment comme électrolyte dans des systèmes électrochromes, notamment des systèmes montés en position verticale.

## Description

La présente invention a pour objet un nouveau matériau électrolyte conducteur protonique. Elle s'applique plus particulièrement à la réalisation des systèmes électrochromes fonctionnant principalement en transmission, tels notamment les vitrages bâtiments ou automobiles.

De la demande de brevet EP-A-253 713, il est connu un système électrochrome fonctionnant par insertion/désinsertion de protons dans une couche d'un oxyde d'un métal de transition tel que le trioxyde de tungstène en contact avec un électrolyte solide tel qu'un matériau macromoléculaire électrolyte conducteur protonique formé par un complexe polyoxyéthylène-acide phosphorique (POE-H₃PO₄). Ce matériau doit être préparé dans des conditions anhydres - en veillant notamment aux choix des solvants - pour éviter une dégradation rapide des autres couches du système associées à cet électrolyte et en particulier des couches de matériau électrochrome et des couches électroniquement conductrices dites électrodes, entre lesquelles est appliquée la différence de potentiel requise pour la coloration ou la décoloration.

D'autre part, pour éviter des phénomènes de bullage qui, après quelques heures de fonctionnement dégrade totalement la qualité optique du système, la demande de brevet EP-A-477 065 préconise un dégazage approfondi de l'électrolyte - sous vide et de préférence à chaud - de façon à éviter de piéger de l'air lors de l'assemblage du vitrage mais aussi à évacuer de l'air - ou d'éventuelles traces de solvant - emprisonnées dans les premières phases de préparation du polymère.

Ce traitement est particulièrement efficace en ce qu'il supprime les bulles qui apparaissent d'ordinaire après quelques dizaines d'heures de fonctionnementl. De plus, il atténue le phénomène de flou, ou autrement dit la proportion de la lumière diffusée au travers du vitrage ; flou, qui, lorsqu'il devient trop important, ne permet plus une vision correcte au travers du vitrage. Toutefois, l'opération de dégazage ou plus exactement le chauffage opéré pendant ce dégazage (soit typiquement 3 heures à une température de l'ordre de 100/120°) ne permet pas d'éliminer voire a tendance à augmenter le jaunissement du polymère et la pureté dans le jaune, cette dernière traduisant essentiellement la perception de la couleur par l'oeil. Or, cette coloration du vitrage, à l'état décoloré, n'est pas souhaitable et de toute façon, le jaune est une couleur relativement peu appréciée pour des vitrages bâtiments. D'autre part, ce traitement de dégazage à chaud agit exactement comme un test thermique et reflète la dégradation du polymère soumis à des températures élevées. Or, il doit être noté qu'un système électrochrome utilisé comme vitrage extérieur peut atteindre ou dépasser une température voisine de 80°C sous l'effet conjugué du rayonnement solaire et de l'effet de corps noir quand le vitrage est à l'état coloré. Indépendamment de tout traitement à chaud de dégazage, il existe ainsi de toute façon un problème de vieillissement par jaunissement du polymère à des températures de cet ordre de grandeur.

L'analyse du problème montre que ce jaunissement est probablement dû à la formation de radicaux libres, formation favorisée par un milieu acide. Pour obvier ce problème, il est connu de retarder la formation de radicaux libres et/ou de bloquer l'action des radicaux libres formés au moyen d'agents antioxydants. Dans le cas présent, la difficulté était notamment de trouver des agents anti-oxydants compatibles avec un milieu acide et les solvants de synthèse et qui n'affectent pas les propriétés optiques du polymère, pour lequel il est souhaité une absence aussi grande que possible de coloration, une transmission lumineuse élevée et une grande qualité de cette transmission, c'est-à-dire, l'absence de toute diffusion notable de la lumière.

Ces considérations ont conduit à écarter les grandes familles d'anti-oxydants que sont les dérivés phénoliques pour lesquels on a constaté, aux concentrations requises pour obtenir l'effet souhaité, à la fois un léger jaunissement du polymère et l'apparition d'un laiteux rendant le vitrage translucide, les dérivés métalliques (rejetés pour leur coloration) et les dérivés aminés (pour lesquels on a pu constater des phénomènes de précipitation en milieu acide avec également formation d'un laiteux). La plupart des agents anti-oxydants de la famille des phosphites et des phosphines n'a pas non plus donné satisfaction, toujours en raison de l'apparition d'un laiteux aux concentrations requises pour l'obtention de l'effet recherché. Par contre, la triphénylphosphine, additif d'anti-jaunissement utilisé principalement lors de l'extrusion des matières plastiques, a donné satisfaction, aucun précipité ou laiteux ne se formant, même pour des concentrations élevées, par exemple de l'ordre de 1,5% (rapportée à la masse pondérale du polymère sans additif).

L'invention a ainsi pour premier objet un matériau macromoléculaire électrolyte conducteur protonique du type complexe solide d'acide orthophosphorique anhydre dans du polyoxyéthylène comportant un additif du type triphénylphosphine (TPP). Cet additif est par exemple ajouté dans une proportion comprise entre 0,5 et 3% et de préférence entre 1 et 1,25% rapportée à la masse pondérale du polymère H₃PO₄-POE, pour un polymère POE dont la masse moléculaire est d'environ 5 000 000. Dans le cadre de l'invention, peut aussi être utilisé un POE de masse moléculaire un peu différente, notamment une masse moléculaire supérieure ; on peut ainsi choisir notamment un POE de masse moléculaire de 6 000 000, 7 000 000 ou 8 000 000.

Il est à noter que la triphénylphosphine a non seulement un effet favorable sur les tests thermiques mais aussi sur les tests de vieillissement aux ultraviolets en retardant l'action des péroxydes formés sous l'action du rayonnement, même si pour autant, la formation de ceux-ci n'est pas totalement évitée.

Un autre problème constaté lors de tests thermiques est celui d'une diminution drastique de la viscosité du matériau. Il s'est avéré notamment qu'après une vingtaine d'heures à 100°C, le fluage du matériau est déjà important, et devient après une centaine d'heures, totalement incompatible avec une position verticale des vitrages - ce qui certes peut être toléré pour des toits ouvrants automobiles par exemple, mais certainement pas pour des vitrages bâtiments. De toute façon, lors de l'assemblage du système électrochrome par une technique voisine des techniques couramment employées pour la préparation de vitrages feuilletés, le polymère est chauffé et un fluage trop important constitue un handicap. Par ailleurs, il a été constaté que ce phénomène de fluage à haute température apparaît même en l'absence de traitement de séchage à chaud du polymère, encore que celui-ci tende à accentuer le problème.

Un second objet de la présente invention est l'obtention d'un matériau macromoléculaire à conduction protonique dont la viscosité à une température de l'ordre de 100°C reste compatible avec un positionnement vertical du système dans lequel ce matériau est incorporé à titre d'électrolyte.

Selon l'invention, ce but est atteint en ajoutant à un polymère conducteur protonique du type complexe solide d'acide phosphorique anhydre dans du polyoxyéthylène, un agent thixotrope tel que de la silice pyrogénée, dans une proportion généralement comprise entre 3 et 20%, rapportée à la masse pondérale du complexe acide orthophosphorique-polyoxyéthylène, hors autres additifs ; ces pourcentages étant donnés pour un polyoxyéthylène dont la masse moléculaire est d'environ 5 000 000.

La silice pyrogénée - connue comme agent épaississant notamment pour des colles, des onguents pharmaceutiques ou cosmétiques - permet une réduction très sensible du fluage, autorisant ainsi sans problème le montage en position verticale.

Les silices pyrogénées hydrophiles, non modifiées chimiquement, à la surface desquelles se trouvent des groupes siloxanes et, en quantité moindre, des groupes silanols, donnent satisfaction à la condition toutefois d'être utilisées en quantités relativement importantes, de l'ordre de 12% ou plus, notamment entre 8 et 16%. De plus, le polymère reste fragile et notamment assez sensible au déchirement, effet inattendu car les silices pyrogénées hydrophiles sont recommandées pour le renforcement de matériaux élastomères.

Tel n'est pas le cas avec les silices pyrogénées hydrophobes, obtenues par une modification chimique de leur surface au moyen de silanes de façon à remplacer les groupes silanols par des groupes silanes. Avec de telles silices hydrophobes, on obtient l'augmentation recherchée de la viscosité pour des proportions généralement comprises entre 4 et 10%, soit environ deux fois inférieures à celles requises dans le cas des silices pyrogénées hydrophiles. De très bons résultats ont été obtenus avec une silice pyrogénée hydrophobe ajoutée à raison de 6 à 8% en poids, ces proportions étant comme dans le cas de l'additif anti-oxydant, données par rapport à la masse du polymère H₃PO₄-POE, sans additif, pour un POE dont la masse moléculaire est d'environ 5 000 000.

De façon surprenante, de telles silices pyrogénées hydrophobes conduisent à un matériau macromoléculaire non collant, peu sensible au déchirement, auto-supporté à température ambiante. Le matériau peut ainsi être préparé à l'avance, stocké en feuilles et découpé aux dimensions souhaitées, en vue de l'assemblage du système électrochrome, reprenant ainsi des conditions opératoires proches de celles pratiquées pour les vitrages feuilletés tels que les pare-brise.

Les agents thixotropes hydrophobes présentent toutefois un défaut, celui de se "craqueler" sur leurs bords, phénomène probablement dû à leur dureté. Mais fort avantageusement, ce phénomène disparait pour les polymères préférés selon l'invention, ayant subi un chauffage pour le dégazage.

De manière très avantageuse, il est apparu, par ailleurs qu'un agent anti-oxydant du type triphénylphosphine confère au polymère des propriétés qui facilitent son séchage et surtout son dégazage qui peut de ce fait être effectué à plus basse température. Comme nous le verrons plus loin, ceci conduit à des résultats totalement inattendus dans les performances optiques. Par ailleurs, ce traitement à plus basse température risque moins de dégrader d'autres couches du système et en particulier celles situées sous le polymère lorsque celui-ci est directement coulé in-situ.

On peut noter qu'avantageusement en présence simultanée d'une silice pyrogénée hydrophobe et de triphénylphosphine, il s'avère que la température lors du traitement de chauffage à chaud peut être réduite de 10/20°C, pour une durée de traitement identique et sans limiter l'effet anti-bullage ou l'effet "anti-craquelure". La température optimale du traitement à chaud est alors d'environ 100°C ce qui est favorable à la fois pour le vieillissement du polymère lui-même et pour celui des autres couches du système. D'autre part, il devient possible d'effectuer ce traitement sur le seul film, celui-ci étant auto-supportable.

L'invention a également pour objet un procédé de traitement par séchage du matériau macromoléculaire précédemment défini. Ce séchage peut être effectué à une température comprise entre 90 et 120°C, de préférence 100 à 110°C. Sa durée peut être d'environ 1 à 3 heures.

D'autres caractéristiques et détails avantageux de l'invention ressortent de la description faite ci-après en référence aux figures annexées qui représentent :
* **figures 1 à 3** : des courbes comparatives montrant l'évolution du flou au cours d'un test thermique à 100°C, 110°C ou 120°C, (flou en % en ordonnée, durée en heures en abcisse),
* **figures 4 à 6** : des courbes comparatives montrant l'évolution de la transmission lumineuse T_{L} au cours d'un test thermique à 100°C, 110°C ou 120°C, (T_{L} en %, en ordonnée, durée en heures en abcisse),
* **figures 7 à 9** : des courbes comparatives montrant l'évolution de la couleur dominante au cours d'un test thermique à 100°C, 110°C ou 120°C, (longueur d'onde dominante en transmission, en nm, en ordonnée, durée en heures en abcisse),
* **figures 10 à 12** : des courbes comparatives montrant l'évolution de la pureté dans la couleur dominante au cours d'un test thermique à 100°C, 110°C ou 120°C, (pureté en % en ordonnée, durée en heures en abcisse).

### PREPARATION DU POLYMERE STANDARD

On dissout sous agitation 25 g d'acide orthophosphorique anhydre (H₃PO₄), sous forme cristallisée, (référence 04102 de la société SOTRACHEM FRANCE), d'un poids moléculaire égal à 98, dans 400 ml de tétrahydrofurane (THF) (référence 28551296 de la société PROLABO FRANCE). On ajoute 23 g de polyoxyéthylène (POE) (référence 18947.2 de la société ALDRICH), dont le poids moléculaire, indiqué au catalogue, est de 5 000 000. On ajoute alors 600 ml d'acétonitrile (ACN) (référence 20060296 de la société PROLABO FRANCE). Le complexe H₃PO₄-POE se forme, et le mélange devient visqueux. Le polymère en solution dans le mélange de solvants ACN/THF est homogénérisé sous agitation pendant une durée de 24 heures pour un litre de préparation et de 3 ou 4 heures pour 4 litres de préparation.

Le polymère en solution est alors placé dans une cuve dont le fond comporte une fente calibrée de 1,1 mm, située à 5 cm du support à recouvrir. La fente libérée, le polymère s'écoule pour former un rideau d'épaisseur homogène. La vitesse du support est réglée de façon à ce que l'angle formé entre le rideau et la verticale soit d'au plus 30°, de sorte que le film ne subisse pas de contrainte par étirement.

Le film est alors séché sous une circulation d'air sec, à température ambiante, pendant 8 heures. Son épaisseur est alors de 80 microns. Il subit ensuite un séchage prolongé de 72 heures à température ambiante (référence) ou de 3 heures en étuve à la température à 100°C (essai n° 1) ou encore 120°C (essai n° 2), sous une pression de 0,05 millibars. Il est aussi possible d'effectuer cette phase de dégazage en deux étapes, une première étape à chaud, sous pression atmosphèrique et une seconde étape sous vide, à température ambiante. L'assemblage en feuilleté est effectué à 120°C, sous une pression de 6 bars, pendant 60 minutes.

### ADDITIFS ANTI-OXYDANTS

Triphénylphosphine (disponible sous la référence 60404 chez RIEDEL de HAEN) produit solide à température ambiante, soluble dans du THF, ajouté ainsi à la préparation à la même étape que l'acide orthophosphorique.

### AGENTS THIXOTROPES

Les essais ont été effectués à partir de silices pyrogénées commercialisées sous la marque déposée AEROSIL de la société DEGUSSA ALLEMAGNE. La teneur en silice de ces silices est supérieure à 99,8% (par rapport à la substance calcinée pendant deux heures à 1000°C), les autres constituants résiduels étant essentiellement de l'alumine (<0,05%), de l'oxyde ferrique (<0,003% pour les deux variantes hydrophiles et à 0,01% pour la variante hydrophobe), du dioxyde de titane (<0,03%).

Les deux variantes hydrophiles testées sont commercialisées sous les références AEROSIL 200 (TX1) et AEROSIL 380 (TX2), la première ayant des particules dont la grandeur moyenne est de 12 nanomètres (surface BET selon la norme DIN 66131 de 200 ± 25) et la seconde d'environ 7 nanomètres (surface BET de 380 ± 30).

La variante hydrophobe est disponible sous la référence AEROSIL R 974 (TX3). La grandeur moyenne de ses particules est de 12 nanomètres (surface BET de 170 ± 20).

Dans tous les cas, l'agent thixotrope est ajouté au polymère, au THF, en suspension, pour éviter la formation de grumeaux. Les pourcentages sont calculés par rapport à la masse pondérale du complexe H₃PO₄-POE

A noter que le polymère avec pour additif un agent thixotrope hydrophobe est avantageusement moins collant et plus résistant.

### ESSAIS DE FLUAGE

Sur un verre de 100 x 100 mm² recouvert de papier adhésif transparent sauf un disque de 50 mm au centre, on coule le polymère. En enlevant l'adhésif après séchage, on obtient un disque de polymère de 50 mm de diamètre et 80 µm d'épaisseur. On assemble avec un autre verre de 100 x 100 mm² et du butyl aux bords des verres. Après autoclave, on mesure l'augmentation de diamètre qui donnera le fluage (en %) ; la charge d'aérosil est exprimée en pourcentage en poids par rapport à la masse de POE + H₃PO₄. A noter que lorsque ce pourcentage est inférieur à 6 %, l'effet mécanique de l'aérosil est pratiquement invisible, sauf pour ce qui concerne l'additif hydrophobe TX3.

Les résultats du test sont résumés dans le tableau suivant:

| | FLUAGE à 120°C | FLUAGE à 130°C |
|---|---|---|
| Référence | 36% | 47% |
| Essai n° 1 | 70% | 80% |
| Essai n° 2 + TX1 (%) | | |
| 6% | 70% | 80% |
| 8% | 40% | 35% |
| 10% | 31% | 37% |
| Essai n° 2 + TX2 (%) | | |
| 6% | 70% | 80% |
| 8% | 28% | 35% |
| 10% | 18% | 25% |
| Essai n° 3 + TX3 (%) | | |
| 6% | 40% | 58% |
| 8% | 10% | 32% |
| 10% | 5% | 12% |

Comme indiqué plus haut, le traitement de dégazage à 120°C (essai n° 2) a un effet très négatif sur la tenue mécanique du polymère. Toutefois, les trois additifs testés permettent de retrouver la tenue mécanique du polymère de référence et même de l'améliorer très sensiblement - en particulier avec l'additif hydrophobe TX3. En pratique, pour éviter toute dégradation du produit, il est souhaitable que le fluage à 120°C soit inférieur à 10%. Cet objectif est atteint avec l'additif TX3 pour un pourcentage d'additif d'environ 8%, pour l'additif TX2, ce pourcentage doit être élévé à environ 14% et 18% dans le cas de l'additif TX1 qui a donné les résultats les moins satisfaisants - du moins si l'on souhaite pour des raisons financières s'en tenir à des teneurs en additifs réduites.

### ASPECTS DU POLYMERE

Comme il sera montré plus loin en comparant l'évolution de différentes propriétés optiques au cours de cycles thermiques, l'addition de silice pyrogénée est pratiquement sans effet sur celles-ci, en comparaison avec le complexe solide H₃PO₄-POE seul. Par contre, avec l'agent thixotrope hydrophobe, les contraintes imposées par les tests thermiques provoquent des craquelures sur les bords du vitrage après une vingtaine d'heures seulement. Fort avantageusement, ce phénomène n'apparait plus avec des polymères comportant également de la TPP comme anti-oxydant qui semble également agir comme un agent légèrement fluidifiant sans pour autant affecter sensiblement la viscosité du polymére. Des essais thermiques sur un vitrage de grande taille (hauteur : 80 - largeur : 40) monté en position verticale, avec un polymère à 8% d'agent R 974 et 1% de TPP n'ont pas montré de fluage après 600 heures à 100°C, et 1 mm seulement de fluage, après 300 heures, quand la proportion d'agent thixotrope hydrophobe est réduite à 6%.

### FLOU

Le flou est défini conventionnellement comme égal à la proportion de lumière diffusée par rapport à la lumière incidente. Au-delà de 1%, il commence à devenir gênant, l'oeil percevant alors une légère déformation des images.

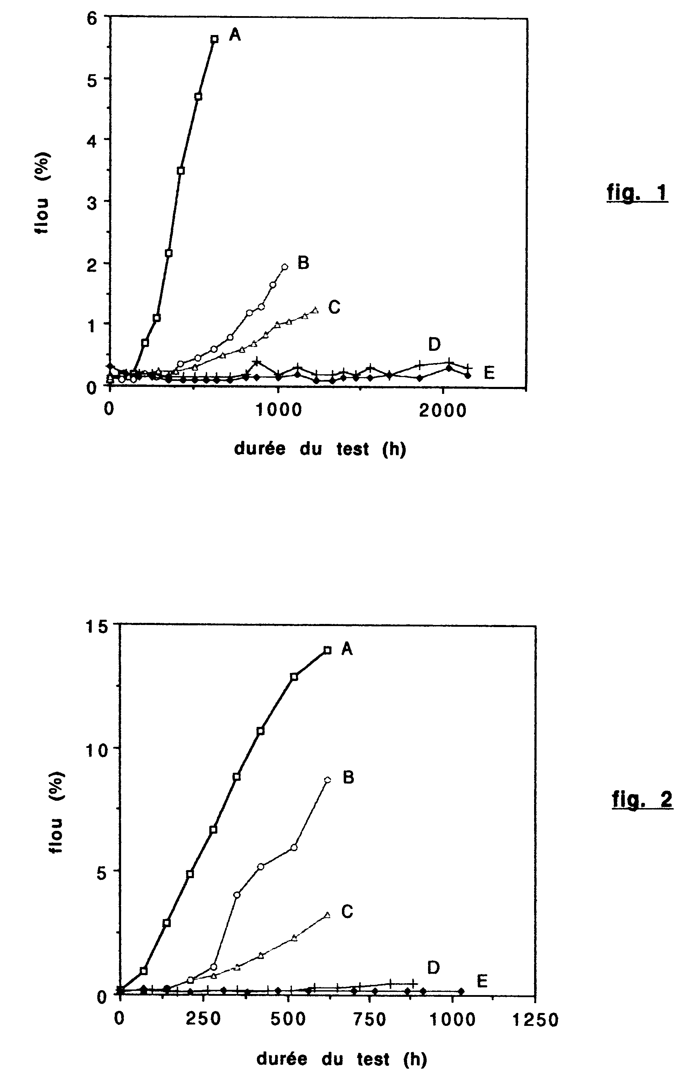

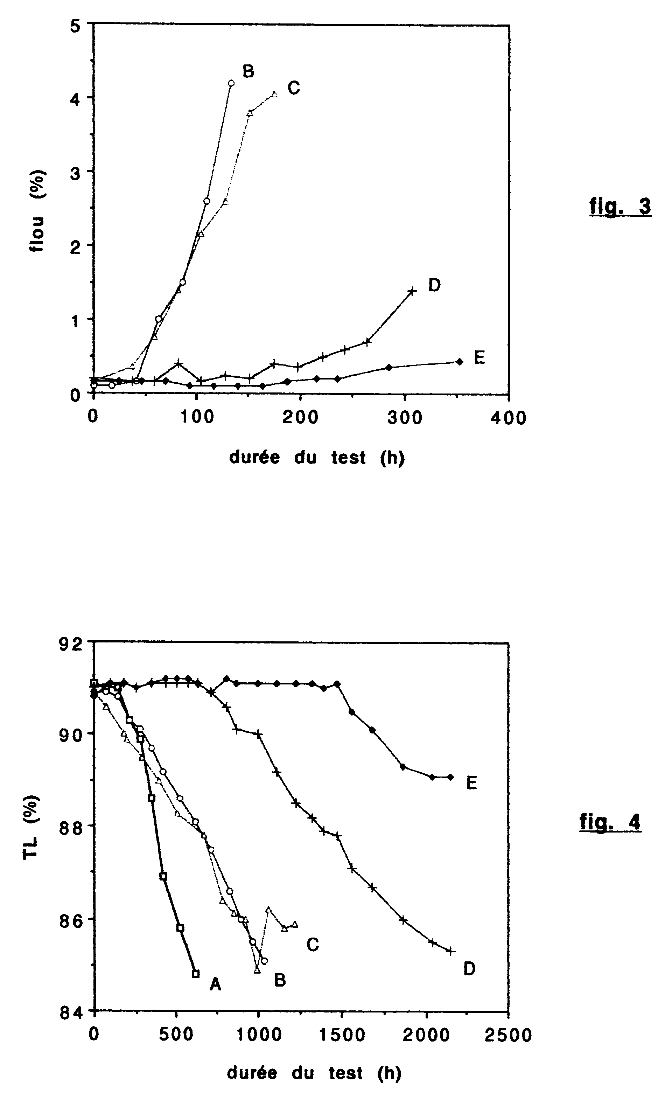

Aux figures 1 à 3 est représentée l'évolution du flou d'un vitrage constitué par deux plaques de verre assemblées par un polymère du type suivant:
· A : polymère standard séché à 20°C pendant 72 heures (Référence)
· A' : polymère standard chauffé à 100°C pendant 3 heures (Essai n° 1)
· B : polymère standard chauffé à 120°C pendant 3 heures (Essai n° 2)
· C : B + 8% d'agent thixotrope hydrophobe R 974 (Essai n° 2 + 8% TX3)
· D : idem C + 1% de TPP (Essai n° 2 + 8% TX3 + 1% TPP)
· E : A' + 8% d'agent thixotrope hydrophobe R 974 + 1% de TPP (Essai n° 1 + 8% TX3 + 1% TPP),

selon la durée du test à 100°C (figure 1), 110°C (figure 2) et 120°C (figure 3).

A l'échelle utilisée, les courbes A et A' sont confondues. Pour être efficace, le chauffage doit être effectué au minimum à 110°C. La courbe B montre cette efficacité, mais avec encore un flou de plus de 1% après environ 800 heures.

La comparaison des différentes courbes de la figure 1 fait ressortir clairement un avantage pour les polymères D et E pour lesquels le flou reste inférieur à 0,5% après 1800 heures à 100°C. Le test à 110°C confirme ce résultat. A 120°C (figure 3), on constate de plus que le polymère E, pour lequel le séchage a été effectué à 100°C seulement, se détériore moins rapidement que le polymère séché à 120°C, alors qu'en l'absence de tout additif, le polymère séché à 120°C est bien supérieur à celui séché à 100°C.

Les données photométriques indiquées ci-après sont faites selon l'Illuminant D₆₅.

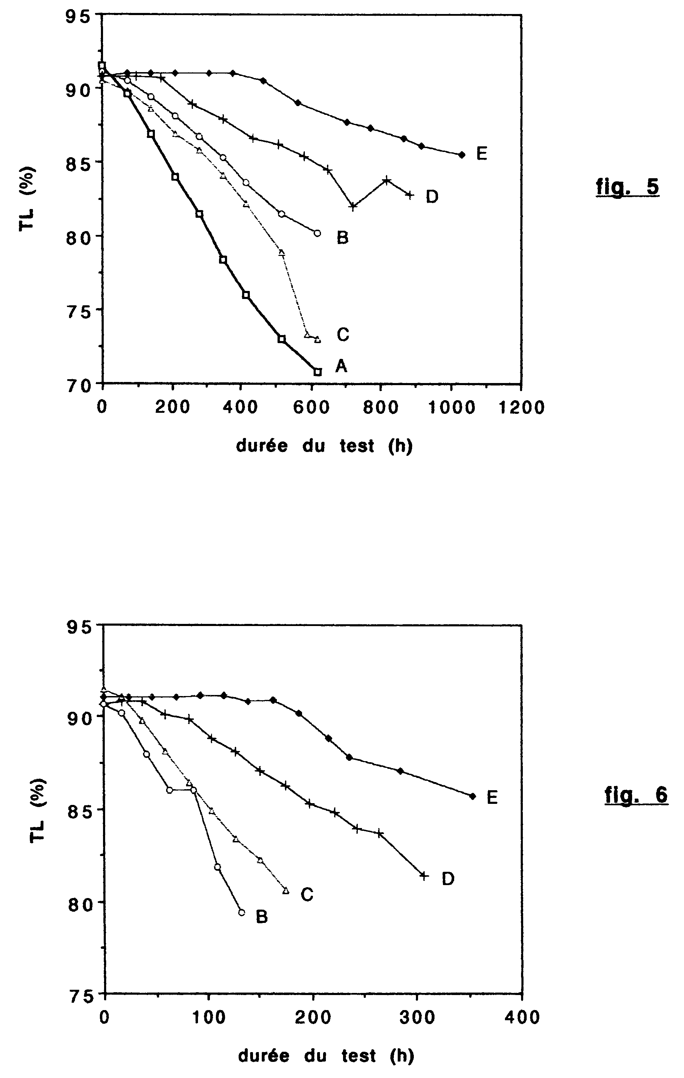

### TRANSMISSION LUMINEUSE - (figures 4 à 6)

Le classement des polymères A à E est pratiquement le même que dans le cas précédent, à ceci près que le polymère C a un comportement quasi identique au polymère B. A noter également que la dégradation de la transmission lumineuse est retardée de plus de 500 heures pour le polymère E (affaiblissement après ± 1500 heures, à comparer à ± 600 heures pour le polymère D, 200 heures pour les polymères C et B et dès le début du test pour le polymère A). Comme précédemment, les tests à 110°C et 120°C confirment ce classement, le polymère D étant le seul à ne pas montrer de dégradation de la transmission lumineuse dès le début du test à 120°C, la courbe présentant au contraire un plateau pendant environ les 150 premières heures.

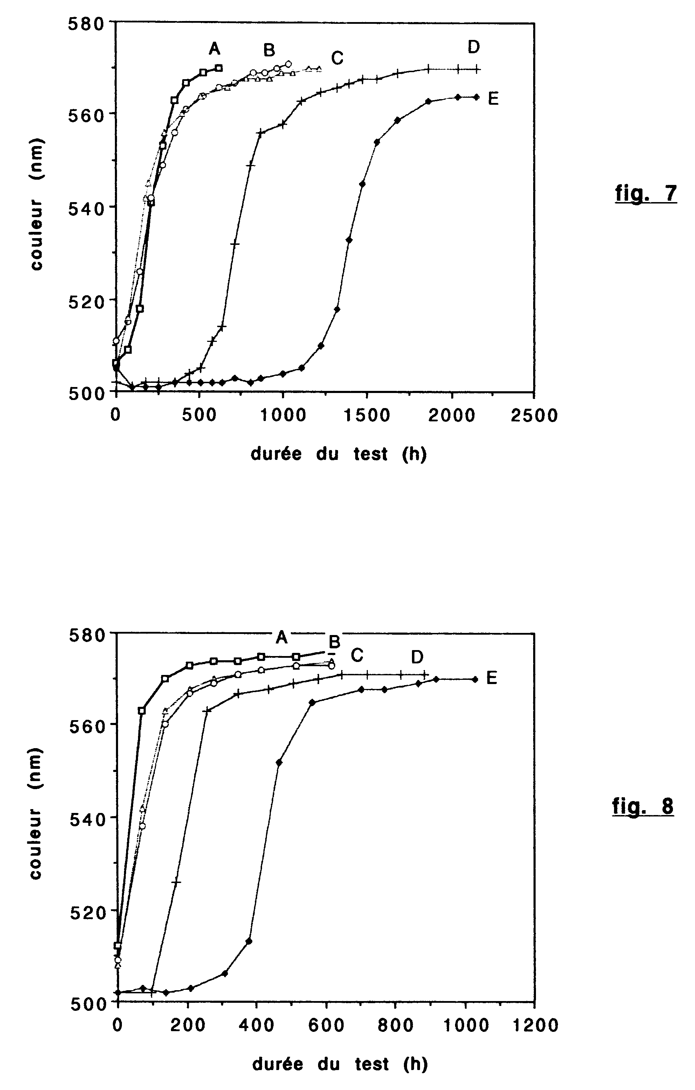

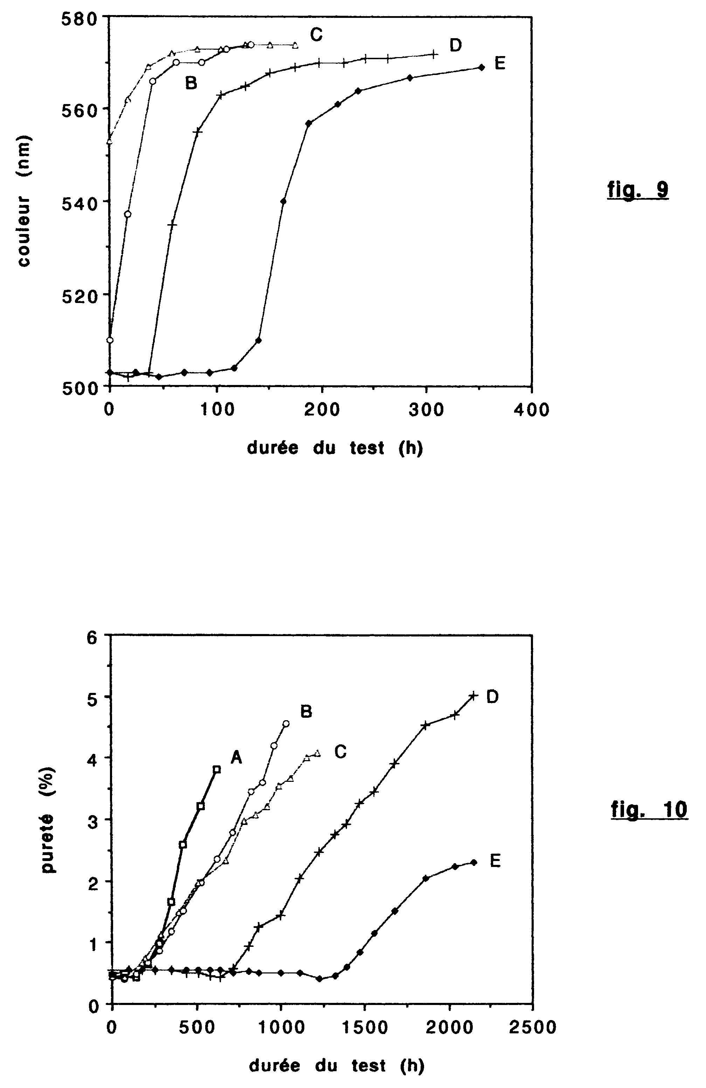

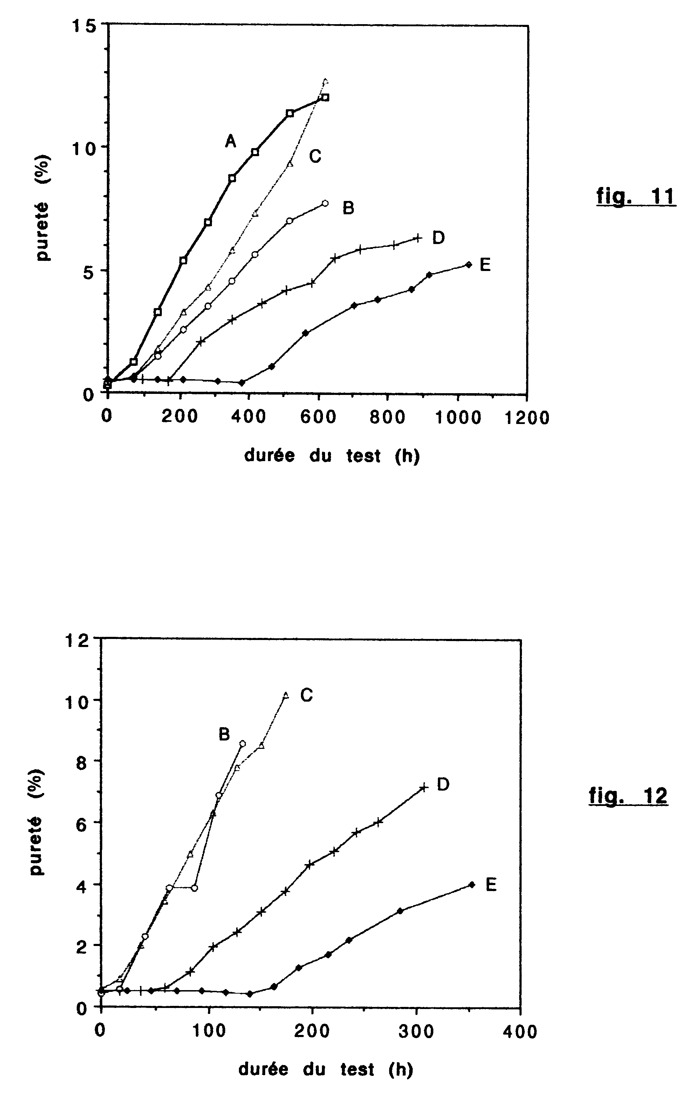

### EVOLUTION DE LA COULEUR - (figures 7 à 9) ET DE LA PURETE (figures 10 à 12)

Les figures 7 à 9 montrent l'évolution de la couleur dominante (longueur d'onde dominante en transmission) en fonction de la durée du test, étant rappelé que des longueurs d'onde de 500-530 nanomètres correspondent à des teintes vertes et 550-570 nanomètres à des teintes jaunes - jaunes orangées, généralement beaucoup moins appréciées pour des vitrages. Pour les polymères A, B, et C, le jaunissement apparaît après environ 250 heures. La durée de l'épreuve est doublée pour le polymère D et est encore prolongée de près de 540% pour le polymère E.

Les courbes des figures 10 à 12 montrant l'évolution de la pureté dans la couleur dominante suivent exactement les mêmes tendances. Donc, non seulement les polymères selon l'invention présentent une tendance au jaunissement bien moindre mais de plus, la pureté dans la couleur dominante - ou en d'autres termes, la perception de la couleur dominante par l'oeil - est beaucoup plus faible avec les polymères D et E.

## Revendications

**1.** Matériau macromoléculaire conducteur protonique comportant un complexe solide d'acide orthophosphorique anhydre dans du polyoxyéthylène, **caractérisé en ce qu**'il comporte en outre un agent anti-oxydant

**2.** Matériau macromoléculaire selon la revendication 1, caractérisé en ce que ledit agent anti-oxydant est du type triphenylphosphine.

**3.** Matériau macromoléculaire selon la revendication 1 ou 2, **caractérisé en ce que** l'agent oxydant est ajouté dans une proportion comprise entre 0,5 et 3% et de préférence entre 1 et 1,25% - rapportée en poids du complexe solide acide orthophosphorique-polyoxyéthylène.

**4.** Matériau macromoléculaire conducteur protonique comportant un complexe solide d'acide orthophosphorique anhydre dans du polyoxyéthylène, **caractérisé en ce qu**'il comporte en outre un agent thixotrope, notamment dans une proportion de 3 à 20%, rapportée au poids du complexe solide d'acide orthophosphorique anhydre dans du polyoxyéthylène.

**5.** Matériau macromoléculaire selon la revendication 4, **caractérisé en ce que** ledit agent thixotrope est un agent thixotrope hydrophile du type silice pyrogénée.

**6.** Matériau macromoléculaire selon la revendication 5, **caractérisé en ce que** ledit agent thixotrope hydrophile est ajouté dans une proportion comprise entre 8 et 16%, rapportée en poids du complexe solide d'acide orthophosphorique anhydre dans du polyoxyéthylène.

**7.** Matériau macromoléculaire selon la revendication 4, **caractérisé en ce que** ledit agent thixotrope est un agent hydrophobe du type silice pyrogénée modifiée par des silanes.

**8** Matériau macromoléculaire selon la revendication 7, **caractérisé en ce que** ledit agent thixotrope hydrophobe est ajouté dans une proportion comprise entre 4 et 10% et de préférence 6 et 8% - rapportée en poids du complexe solide d'acide phosphorique anhydre dans du polyoxyéthylène.

**9.** Matériau macromoléculaire selon la revendication 8, **caractérisé en ce qu**'il se présente en feuilles auto-supportées.

**10.** Matériau macromoléculaire selon l'une des revendications 1 à 3, **caractérisé en ce qu**'il comporte en outre un agent thixotrope selon l'une des revendications 4 à 8.

**11.** Matériau macromoléculaire comportant un complexe solide acide orthophosphorique-polyoxyéthylène avec environ 8% de silice pyrogénée hydrophobe, et environ 1% de triphénylphosphine.

**12.** Application du matériau macromoléculaire selon l'une des revendications précédentes comme électrolyte de systèmes électrochromes.

**13.** Application selon la revendication 12 à des systèmes électrochromes montés en position verticale.

**14.** Procédé de traitement du matériau macromoléculaire selon l'une des revendications 1 à 11, **caractérisé en ce qu'**il comprend une phase de séchage à une température comprise entre 90 et 120°C, notamment entre 100 et 110°C, de préférence pendant 1 à 3 heures.
